# EUROPEAN PATENT SPECIFICATION

(11) **EP 3 254 786 B1**
(45) Date of publication and mention of the grant of the patent: **15.02.2023**
(21) Application number: 17166566.4
(22) Date of filing: 13.04.2017
(51) Int. Cl.: B23B 23/00

(54) **TAILSTOCK TRANSFERRING APPARATUS**
REITSTOCKÜBERTRAGUNGSVORRICHTUNG
APPAREIL DE TRANSFERT DE CONTREPOUPÉE

(30) Priority: 15.04.2016 KR 20160045919
(43) Date of publication of application: 13.12.2017
(73) Proprietor: DN Solutions Co., Ltd., Changwon-si, Gyeongsangnam-do 51537 (KR)
(72) Inventor: WOO, Jin Geun, 51674 Gyeongsangnam-do (KR)
(74) Representative: Isarpatent

(56) References cited:
- EP-A1- 2 808 108
- KR-A- 20150 073 461
- US-A1- 2008 092 680

## Description

### TECHNICAL FIELD

The present invention relates to a tailstock transferring apparatus for a machine tool.

### BACKGROUND

A machine tool refers to a machine used to process metallic or nonmetallic materials (hereinafter, referred to as a base material) to a shape and a dimension using appropriate tools through various types of cutting or non-cutting operations, or used to more precisely process the base material.

An NC lathe, which is one of the machine tools, processes a base material having a comparatively long shape by clamping the base material, rotating the base material, and bringing a tool into contact with a surface of the rotating base material.

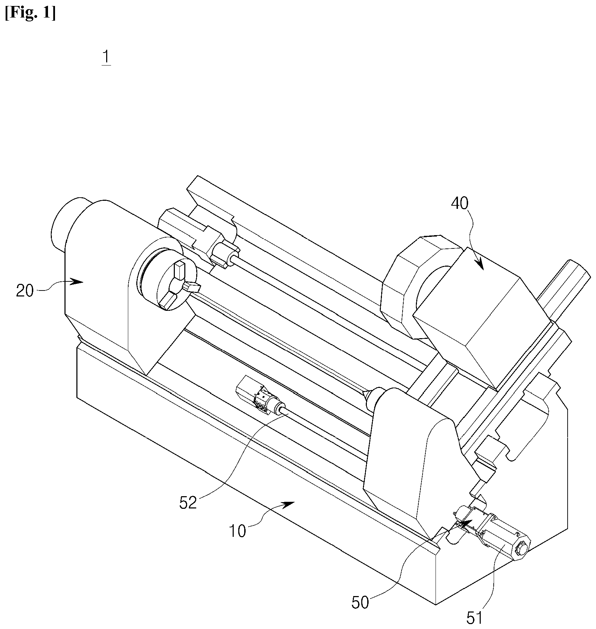

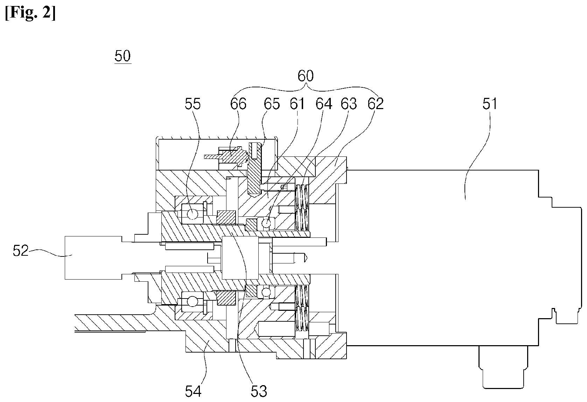

FIG. 1 is a perspective view of a typical NC lathe, and FIG. 2 is a cross-sectional view of a tailstock transferring unit in the related art.

Specifically, referring to FIG. 1, an NC lathe 1 may include a bed 10 which is fixed to a ground surface, a main shaft 20 which is fixed at one side of the bed 10 and clamps and rotates a base material, a tailstock which is disposed to correspond to a rotation axis of the main shaft 20 and fixes a free end of the base material clamped by the main shaft 20, and a tool post 40 which is disposed to be movable on the bed 10 and comes into contact with the base material so as to process the base material.

That is, the tailstock fixes the base material so that the base material is rotatable, thereby enabling the base material to be precisely processed, and the tailstock is transferred in a direction close to a workpiece by a tailstock transferring unit 50, thereby supporting the workpiece.

Referring to FIG. 2, the tailstock transferring unit 50 in the related art includes a ball screw 52 which is rotated by a servo motor 51, a coupling 53 which connects the servo motor 51 and the ball screw 52, a housing 54 which accommodates the ball screw 52 and the coupling 53, a bearing unit 55 which is disposed between the housing 54 and the coupling 53, and a thrust device 60.

When the ball screw 52 is rotated by driving power of the servo motor 51, a transferring nut (not illustrated), which is disposed on a screw thread of the ball screw 52, moves rectilinearly, and thus the tailstock disposed on the transferring nut moves to press and fix the base material.

Here, when the tailstock presses the base material, the tailstock transferring unit 50 receives reaction force in a direction opposite to the direction in which the base material is pressed, and the thrust device 60 provides the tailstock transferring unit 50 with thrust against the reaction force in the direction in which the base material is pressed.

Specifically, the thrust device 60 in the related art includes a first cap 61 which is accommodated in the housing 54 and disposed outside the coupling 53, a second cap 62 which is disposed between the housing 54 and the servo motor 51, and a spring 63 which is disposed between the first cap 61 and the second cap 62.

A bearing 64 may be disposed between the first cap 61 and the coupling 53, a detecting pin 65 may be disposed at an upper side of the first cap 61, and a detecting sensor 66, which is in contact with the detecting pin 65, may be disposed in the housing 54.

The tailstock transferring unit 50 in the related art moves the tailstock to a desired point by using the servo motor 51, and compresses the spring 63 to a predetermined degree by controlling a torque value of the servo motor 51 as much as force desired by a user in order to support the base material with predetermined force, and when a desired numerical value is reached, a brake attached to the servo motor 51 or the ball screw 52 is operated to fix the position of the spring 63 and maintain thrust.

However, when the brake is released to move the tailstock rearward after the base material is completely processed, a great impact load occurs at that moment in the opposite direction, such that noise occurs and an alarm sounds in respect to overload of the servo motor 51, and as a result, there is a problem in that there is a limitation in generating thrust to a predetermined level or higher compared to a capacity of the servo motor 51. KR 2015/0073461 A discloses a tail stock transfer system according to the preamble of claim 1.

### SUMMARY

The present invention has been made in an effort to provide a tailstock transferring apparatus capable of preventing abnormal noise by reducing an impact load occurring at the tailstock transferring apparatus, inhibiting the occurrence of an alarm in respect to overload of a servo motor, and implementing high output.

An exemplary embodiment of the present invention provides a tailstock transferring apparatus having the features of claim 1.

The connecting member may include: a connecting housing which accommodates the other side of the ball screw; and a bearing unit which is disposed between the connecting housing and the ball screw.

The connecting member may further include a lock nut which is fastened to the other side of the ball screw and fixes the bearing unit.

The piston may be formed to be stepped so that a space is formed between the fluid accommodating groove and the fluid flowing groove.

Sealing members may be disposed between the piston and the cylinder, between the piston and the first cap, and between the first cap and the cylinder, respectively.

A lock nut for fixing the second cap may be disposed on the piston.

The tailstock transferring apparatus may further include a detecting sensor which is fixed to the main housing and detects a position of the piston by coming into contact with the other end of the piston.

The tailstock transferring apparatus may further include: a guide groove which is formed in the main housing; and a guide pin which is fixed to the connecting member and moves rectilinearly along the guide groove.

The present disclosure is advantageous in utilizing a space in a machine tool and distributing a weight by changing an arrangement structure of a thrust generating device.

The present invention provides the tailstock transferring apparatus capable of significantly reducing the occurrence of impact and noise, inhibiting the occurrence of an alarm in respect to overload of a servo motor, and implementing high output by including a fluid flowing structure including an orifice, improving a structure of the thrust generating unit having the spring, and allowing the movement caused by reaction force and thrust to be performed slowly.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a perspective view of a typical NC lathe.
FIG. 2 is a cross-sectional view of a tailstock transferring unit in the related art.
FIG. 3 is a cross-sectional view of a tailstock transferring apparatus according to an exemplary embodiment of the present disclosure.
FIG. 4 is a view illustrating a state in which thrust is received in FIG. 3.

### DETAILED DESCRIPTION

In the following detailed description, reference is made to the accompanying drawing, which forms a part hereof.

Hereinafter, an exemplary embodiment of the present disclosure will be described in detail with reference to the accompanying drawings.

Unless particularly defined otherwise, all terms used herein have the same meanings as general meanings of terms which are understood by those skilled in the art, and if a term used herein conflicts with a general meaning of the term, the meaning of the term defined herein will supersede the general meaning.

However, the disclosure to be described below is only to explain the exemplary embodiment of the present disclosure but not to limit the scope of the present disclosure, and like reference numerals indicate like elements throughout the specification.

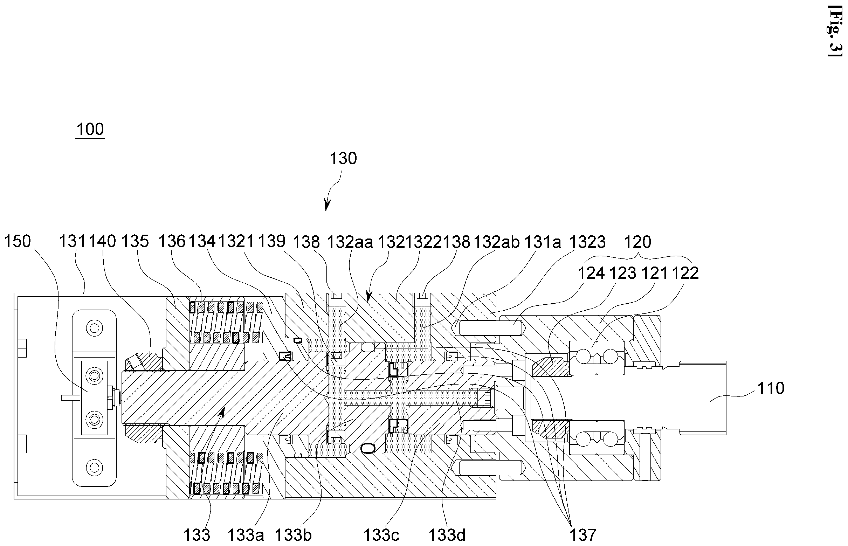

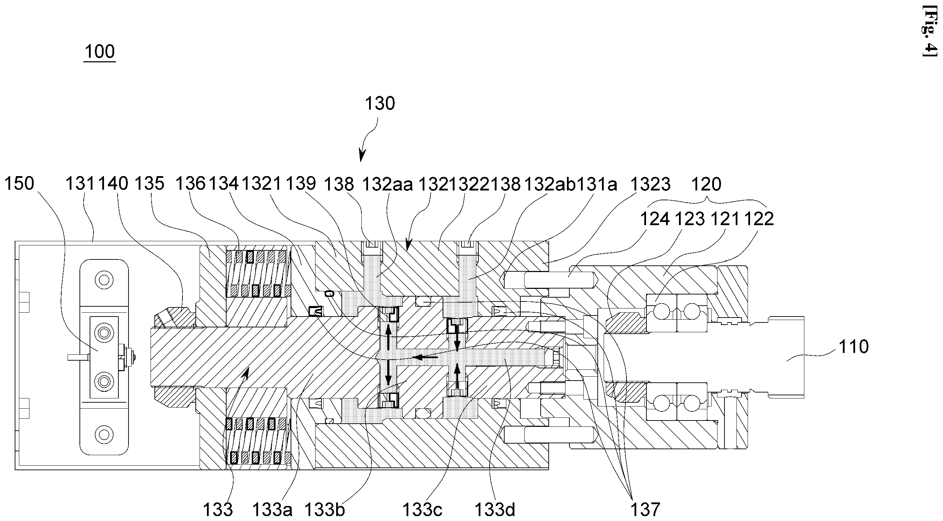

FIG. 3 is a cross-sectional view of a tailstock transferring apparatus according to an exemplary embodiment of the present disclosure, and FIG. 4 is a view illustrating a state in which thrust is received in FIG. 3.

Hereinafter, force, which is applied by a tailstock in a direction of a main shaft by a rotation of a ball screw, is referred to as transferring force, force, which is applied to the ball screw in the opposite direction by the transferring force, is referred to as reaction force, and force, which is generated by a thrust generating unit to be described below in order to reduce the reaction force, is referred to as thrust.

That is, the transferring force and the thrust mean force generated in the same direction (direction of the main shaft).

Referring to FIG. 3, a tailstock transferring apparatus 100 according to an exemplary embodiment comprises a ball screw 110, a connecting member 120, and a thrust generating unit 130, and as illustrated in FIG. 1, the tailstock transferring apparatus 100 may include a drive unit 51.

Specifically, the ball screw 110 may be rotated at one side by being supplied with driving power from the drive unit 51 illustrated in FIG. 1. The drive unit 51 may be a drive motor which is connected directly to the ball screw 110 or connected to the ball screw 110 via pulleys.

A screw thread is formed on an outer circumferential surface of the ball screw 110, a transferring nut (not illustrated), which is coupled to the screw thread and moves rectilinearly by a rotational motion of the ball screw 110, is disposed on the screw thread, and a tailstock illustrated in FIG. 1 is disposed on the transferring nut, thereby fixing and pressing a base material.

The connecting member 120 may serve to accommodate the other side of the ball screw 110 so as to allow the ball screw 110 to smoothly rotate, transmit reaction force to the thrust generating unit 130, and transmit thrust, against the reaction force, to the ball screw 110.

To implement the aforementioned functions, the connecting member 120 may include a connecting housing 121 which accommodates the other side of the ball screw 110, and a bearing unit 122 which is disposed between the connecting housing 121 and the ball screw 110, and may further include a lock nut 123 which is fastened to the other side of the ball screw 110 and fixes the bearing unit 122.

The connecting member 120 may further include guide pins 124 which are fixed to the connecting member 120 and rectilinearly move along guide grooves 131a to be described below.

The thrust generating unit 130 is fastened to the connecting member 120, and may provide the thrust in a direction toward the other side of the ball screw 110 (direction of the main shaft) when the ball screw 110 receives force in one side direction, that is, reaction force.

That is, when the tailstock moves in the direction of the main shaft and fixes and presses the base material by transferring force generated by the rotation of the ball screw 110, the ball screw 110 receives reaction force in a direction opposite to the direction of the main shaft, and as a result, the base material cannot be securely fixed.

Therefore, the thrust generating unit 130 according to the exemplary embodiment generates the thrust, which is force in the direction opposite to the direction of the reaction force, and pulls the ball screw 110 in the direction of the transferring force, thereby achieving force for securely fixing the base material.

With the structure according to the exemplary embodiment in which the drive unit 51, the ball screw 110, the connecting member 120, and the thrust generating unit 130 are disposed, it is possible to reduce concentration of weight by more uniformly disposing the constituent elements on the machine tool, and to effectively use a space in the machine tool.

Specifically, the thrust generating unit 130 according to the exemplary embodiment may include a main housing 131, a cylinder 132, a piston 133, a first cap 134, a second cap 135, and a spring 136, and may further include sealing members 137, a lock nut 140, and a detecting sensor 150.

The main housing 131 accommodates the constituent elements of the thrust generating unit 130, and may be fixed to the machine tool.

The main housing 131 may have the guide grooves 131a formed in a side surface adjacent to the connecting member 120, and the guide pins 124 are disposed in the guide grooves 131a so as to be moved rectilinearly, such that displacement of an axis of the ball screw 110 may be maintained to be constant with respect to the ground surface.

The two guide grooves 131a may be formed to face each other at an interval of 180° as illustrated, or the four guide grooves 131a may be formed at an interval of 90°. Of course, the guide pins 124 may be disposed on a side surface of the connecting member 120 such that the number of guide pins 124 correspond to the number of guide grooves 131a.

The cylinder 132 is accommodated in the main housing 131 and has one or more fluid accommodating grooves 132a, thereby enabling the piston 133 to be described below to move rectilinearly.

Specifically, one or more fluid accommodating grooves 132aa and 132ab are formed in the cylinder 132 in an axial direction of the piston 133, and two fluid accommodating grooves are illustrated, but the present disclosure is not limited thereto.

In order to ensure a flow space of a fluid, the cylinder 132 may be formed to be stepped so that an inner circumferential surface thereof is decreased toward the connecting member 120, and a first hollow portion 1321, a second hollow portion 1322, which has a diameter smaller than that of the first hollow portion 1321, and a third hollow portion 1323, which has a diameter smaller than that of the second hollow portion 1322 and is adjacent to the connecting member 120, may be sequentially formed.

In this case, the fluid accommodating grooves 132aa and 132ab are formed in the first hollow portion 1321, and may include a first fluid accommodating groove 132aa at which the second hollow portion 1322 starts, and a second fluid accommodating groove 132ab which is formed in the second hollow portion 1322 and at which the third hollow portion 1323 starts.

The fluid accommodating grooves 132aa and 132ab may be sealed by plugs 138 in order to prevent oil from leaking to an outer circumferential surface of the cylinder 132.

Meanwhile, the piston 133 is movably accommodated in the cylinder 132 as one side of the piston 133 is fastened to the connecting member 120, and may include a fluid flowing groove 133d formed to communicate with the fluid accommodating grooves 132aa and 132ab.

The fluid flowing groove 133d may include a main groove which is formed on a central axis of the piston 133, and branch grooves which branch off from the main groove toward the fluid accommodating grooves 132aa and 132ab.

The piston 133 may be formed to be stepped so that spaces are formed between the fluid accommodating grooves 132aa and 132ab and the fluid flowing groove 133d. Specifically, the piston 133 may include a front end portion 133a which has a diameter smaller than that of the second hollow portion 1322, an intermediate portion 133b which is formed to correspond to a diameter of the second hollow portion 1322, and a rear end portion 133c which is formed to correspond to a diameter of the third hollow portion 1323.

The emplary embodiment further includes the first cap 134 which is fixed to the cylinder 132 and seals the outer circumferential surface of the piston 133 in order to an internal oil leakage, and the sealing members 137 may be disposed between the piston 133 and the cylinder 132, between the piston 133 and the first cap 134, and between the first cap 134 and the cylinder 132, respectively.

Therefore, in the exemplary embodiment, the piston 133 rectilinearly moves slowly as the fluid accommodated in the tailstock transferring apparatus flows, and as a result, it is possible to significantly reduce impact and the occurrence of noise caused by the impact, and the fluid flowing groove 133d may have orifices 139 formed in the direction toward the fluid accommodating grooves 132aa and 132ab in order to more effectively improve the function of reducing impact and noise.

An operation mechanism for reducing impact and noise will be described below with reference to FIG. 4.

To provide thrust against reaction force, the thrust generating unit 130 according to the exemplary embodiment includes the second cap 135 which is fixed to the outer circumferential surface of the piston 133 so as to be spaced apart from the first cap 134 at a predetermined interval, and the spring 136 which is disposed between the first cap 134 and the second cap 135, and the lock nut 140 for fixing the second cap 135 may be disposed on the piston 133.

That is, when the ball screw 110 is moved by reaction force to the right based on the drawing, the connecting member 120 and the piston 133, which are connected to the ball screw 110, are also moved to the right, and as a result, the second cap 135 is also moved to the right. In this case, the spring 136, which is disposed between the first cap 134 and the second cap 135, is compressed, and as a result, thrust is generated by restoring force of the spring 136.

The exemplary embodiment may further include a detecting sensor 150 which is fixed to the main housing 131 and detects a position of the piston 133 by coming into contact with the other end of the piston 133.

With the detecting sensor 150, it is possible to prevent a safety accident because the machine tool stops operating when the ball screw 110 and the piston 133 are suddenly moved to the left (direction of transferring force) in a state in which the ball screw 110 is operated and the piston 133 is moved to the right by reaction force, and then an end of the piston 133 comes into contact with the detecting sensor 150.

An operation mechanism of the tailstock transferring apparatus 100 according to the exemplary embodiment will be described with reference to FIG. 4.

The ball screw 110 may be rotated forward or reversely by the drive unit. When the ball screw 110 is rotated forward, the tailstock is moved in the direction of the main shaft and fixes and presses the base material, and the reverse rotation means the movement in the opposite direction.

Once the ball screw 110 is rotated forward, the tailstock presses the base material, and as a result, reaction force is applied to the ball screw 110 in the opposite direction.

As illustrated in FIGS. 3 and 4, positions of the ball screw 110, the connecting member 120, the piston 133, and the second cap 135 are moved to the right by the reaction force.

In this case, the fluid in the first fluid accommodating groove 132aa flows in a direction toward a first stepped portion because a volume in a space between the first stepped portion and the piston 133 is increased, and the fluid flows in a direction toward the second fluid accommodating groove 132ab because a volume in a space between a second stepped portion and the piston 133 is decreased.

Because of restoring force of the spring 136 and a flow velocity of the fluid passing through the orifices 139, the piston 133 and the ball screw 110 are moved slowly to the right.

When the thrust is eliminated, the directions of the restoring force of the spring 136 and the flow of the fluid are reversed as indicated by arrows in FIG. 4, and as a result, the piston 133 and the ball screw 110 are also moved slowly to the left.

Therefore, the tailstock transferring apparatus 100 according to the exemplary embodiment may significantly reduce impact and noise caused by a rapid movement, and may effectively maintain thrust.

From the foregoing, it will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A tailstock transferring apparatus (100) comprising:
a ball screw (110) which is rotated by being supplied with driving power from one side;
a connecting member (120) which accommodates the other side of the ball screw (110); and
a thrust generating unit (130) which is fastened to the connecting member (120) and provides thrust in a direction toward the other side of the ball screw (110) when the ball screw (110) receives force in one side direction,
wherein the thrust generating unit (130) includes:
a main housing (131);
a cylinder (132) which is accommodated in the main housing (131) and has one or more fluid accommodating grooves (132aa, 132ab);
a piston (133) which is movably accommodated in the cylinder (132);
a first cap (134) which is fixed to the cylinder (132) and seals an outer circumferential surface of the piston (133); said apparatus being **characterised in that**:
one side of the piston (133) is fastened to the connecting member (120), and has a fluid flowing groove (133d) formed to communicate with the one or more fluid accommodating grooves (132aa, 132ab);
the thrust generating unit (130) further includes:
a second cap (135) which is fixed to the outer circumferential surface of the piston (133) so as to be spaced apart from the first cap (134) at a predetermined interval; and
a spring (136) which is disposed between the first cap (134) and the second cap (135), and
wherein the fluid flowing groove (133d) has an orifice (139) formed in a direction toward the one or more fluid accommodating grooves (132aa, 132ab).

2. The tailstock transferring apparatus of claim 1, wherein the connecting member (120) includes:
a connecting housing (121) which accommodates the other side of the ball screw (110); and
a bearing unit (122) which is disposed between the connecting housing (121) and the ball screw (110).

3. The tailstock transferring apparatus of claim 2, wherein the connecting member (120) further includes a lock nut (123) which is fastened to the other side of the ball screw (110) and fixes the bearing unit (122).

4. The tailstock transferring apparatus of any one of claim 1 to 3, wherein the piston (133) is formed to be stepped so that a space is formed between the one or more fluid accommodating grooves (132aa, 132ab) and the fluid flowing groove (133d).

5. The tailstock transferring apparatus of any one of claim 1 to 4, wherein sealing members (137) are disposed between the piston (133) and the cylinder (132), between the piston (133) and the first cap (134), and between the first cap (134) and the cylinder (132), respectively.

6. The tailstock transferring apparatus of any one of claim 1 to 4, wherein a lock nut (140) for fixing the second cap (135) is disposed on the piston (133).

7. The tailstock transferring apparatus of any one of claim 1 to 4, further comprising:
a detecting sensor (150) which is fixed to the main housing (131) and detects a position of the piston (133) by coming into contact with the other end of the piston (133).

8. The tailstock transferring apparatus of any one of claim 1 to 4, further comprising:
a guide groove (131a) which is formed in the main housing (131); and
a guide pin (124) which is fixed to the connecting member (120) and moves rectilinearly along the guide groove (131a).

## Patentansprüche

1. Reitstockübertragungsanordnung (100), umfassend:
eine Kugelumlaufspindel (110), die gedreht wird, indem sie von einer Seite mit Antriebskraft versorgt wird;
ein Verbindungselement (120), das die andere Seite der Kugelumlaufspindel (110) aufnimmt; und
eine schuberzeugende Einheit (130), die an dem Verbindungselement (120) befestigt ist und einen Schub in einer Richtung hin zu der anderen Seite der Kugelumlaufspindel (110) erzeugt, wenn die Kugelumlaufspindel (110) eine Kraft in einer Seitenrichtung erhält,
wobei die schuberzeugende Einheit (130) aufweist:
ein Hauptgehäuse (131);
einen Zylinder (132), der in dem Hauptgehäuse (131) aufgenommen ist und eine oder mehrere Fluidaufnahmenuten (132aa, 132ab) aufweist;
einen Kolben (133), der in dem Zylinder (132) bewegbar aufgenommen ist;
eine erste Kappe (134), die an dem Zylinder (132) befestigt ist und eine äußere Umfangsfläche des Kolbens (133) abdichtet;
wobei die Vorrichtung **dadurch gekennzeichnet ist, dass**:
eine Seite des Kolbens (133) an dem Verbindungselement (120) befestigt ist und eine Fluidfließnut (133d) aufweist, die so gebildet ist, dass sie mit der einen oder den mehreren Fluidaufnahmenuten (132aa, 132ab) verbunden ist;
wobei die schuberzeugende Einheit (130) ferner aufweist:
eine zweite Kappe (135), die an der äußeren Umfangsfläche des Kolbens (133) so befestigt ist, dass sie von der ersten Kappe (134) in einem vorbestimmten Abstand beabstandet ist; und
eine Feder (136), die zwischen der ersten Kappe (134) und der zweiten Kappe (135) angeordnet ist, und
wobei die Fluidfließnut (133d) eine Öffnung (139) aufweist, die in einer Richtung hin zu der einen oder den mehreren Fluidaufnahmenuten (132aa, 132ab) gebildet ist.

2. Reitstockübertragungsvorrichtung nach Anspruch 1, wobei das Verbindungselement (120) aufweist:
ein Verbindungsgehäuse (121), das die andere Seite der Kugelumlaufspindel (110) aufnimmt; und
eine Lagereinheit (122), die zwischen dem Verbindungsgehäuse (121) und der Kugelumlaufspindel (110) angeordnet ist.

3. Reitstockübertragungsvorrichtung nach Anspruch 2, wobei das Verbindungselement (120) ferner eine Verriegelungsmutter (123) aufweist, die an der anderen Seite der Kugelumlaufspindel (110) befestigt ist und die Lagereinheit (122) fixiert.

4. Reitstockübertragungsvorrichtung nach einem der Ansprüche 1 bis 3, wobei der Kolben (133) so gebildet ist, dass er abgestuft ist, so dass ein Raum zwischen der einen oder den mehreren Fluidaufnahmenuten (132aa, 132ab) und der Fluidaufnahmenut (133d) gebildet ist.

5. Reitstockübertragungsvorrichtung nach einem der Ansprüche 1 bis 4, wobei Dichtungselemente (137) jeweils zwischen dem Kolben (133) und dem Zylinder (132), zwischen dem Kolben (133) und der ersten Kappe (134) und zwischen der ersten Kappe (134) und dem Zylinder (132) angeordnet sind.

6. Reitstockübertragungsvorrichtung nach einem der Ansprüche 1 bis 4, wobei eine Verriegelungsmutter (140) zum Befestigen der zweiten Kappe (135) auf dem Kolben (133) angeordnet ist.

7. Reitstockübertragungsvorrichtung nach einem der Ansprüche 1 bis 4, ferner umfassend:
einen Erfassungssensor (150), der an dem Hauptgehäuse (131) befestigt ist und eine Position des Kolbens (133) erfasst, indem er mit dem anderen Ende des Kolbens (133) in Kontakt kommt.

8. Reitstockübertragungsvorrichtung nach einem der Ansprüche 1 bis 4, ferner umfassend:
eine Führungsnut (131a), die in dem Hauptgehäuse (131) gebildet ist; und
einen Führungsstift (124), der an dem Verbindungselement (120) befestigt ist und sich geradlinig entlang der Führungsnut (131a) bewegt.

## Revendications

1. Appareil de transfert de poupée mobile (100) comprenant :
une vis à billes (110) qui est mise en rotation en étant alimentée en puissance d'entraînement depuis un côté ;
un organe de raccordement (120) qui accueille l'autre côté de la vis à billes (110) ; et
une unité de génération de poussée (130) qui est attachée à l'organe de raccordement (120) et fournit une poussée dans une direction vers l'autre côté de la vis à billes (110) lorsque la vis à billes (110) reçoit une force dans une direction de côté,
dans lequel l'unité de génération de poussée (130) comporte :
un boîtier principal (131) ;
un vérin (132) qui est accueilli dans le boîtier principal (131) et a une ou plusieurs rainures d'accueil de fluide (132aa, 132ab) ;
un piston (133) qui est accueilli mobile dans le vérin (132) ;
un premier capuchon (134) qui est fixé au vérin (132) et assure l'étanchéité d'une surface circonférentielle externe du piston (133) ;
ledit appareil étant **caractérisé en ce que** :
un côté du piston (133) est attaché à l'organe de raccordement (120) et a une rainure d'écoulement de fluide (133d) formée pour communiquer avec les une ou plusieurs rainures d'accueil de fluide (132aa, 132ab) ;
l'unité de génération de poussée (130) comporte en outre :
un second capuchon (135) qui est fixé à la surface circonférentielle externe du piston (133) de façon à être espacé du premier capuchon (134) à un intervalle prédéterminé ; et
un ressort (136) qui est disposé entre le premier capuchon (134) et le second capuchon (135), et
dans lequel la rainure d'écoulement de fluide (133d) a un orifice (139) formé dans une direction vers les une ou plusieurs rainures d'accueil de fluide (132aa, 132ab).

2. Appareil de transfert de poupée mobile selon la revendication 1, dans lequel l'organe de raccordement (120) comporte :
un boîtier de raccordement (121) qui accueille l'autre côté de la vis à billes (110) ; et
une unité de palier (122) qui est disposée entre le boîtier de raccordement (121) et la vis à billes (110).

3. Appareil de transfert de poupée mobile selon la revendication 2, dans lequel l'organe de raccordement (120) comporte en outre un écrou autofreiné (123) qui est attaché à l'autre côté de la vis à billes (110) et fixe l'unité de palier (122).

4. Appareil de transfert de poupée mobile selon l'une quelconque des revendications 1 à 3, dans lequel le piston (133) est formé pour être étagé de sorte qu'un espace soit formé entre les une ou plusieurs rainures d'accueil de fluide (132aa, 132ab) et la rainure d'écoulement de fluide (133d).

5. Appareil de transfert de poupée mobile selon l'une quelconque des revendications 1 à 4, dans lequel des organes d'étanchéité (137) sont disposés respectivement entre le piston (133) et le vérin (132), entre le piston (133) et le premier capuchon (134), et entre le premier capuchon (134) et le vérin (132).

6. Appareil de transfert de poupée mobile selon l'une quelconque des revendications 1 à 4, dans lequel un écrou autofreiné (140) pour fixer le second capuchon (135) est disposé sur le piston (133).

7. Appareil de transfert de poupée mobile selon l'une quelconque des revendications 1 à 4, comprenant en outre :
un capteur de détection (150) qui est fixé au boîtier principal (131) et détecte une position du piston (133) en entrant en contact avec l'autre extrémité du piston (133).

8. Appareil de transfert de poupée mobile selon l'une quelconque des revendications 1 à 4, comprenant en outre :
une rainure de guidage (131a) qui est formée dans le boîtier principal (131) ; et
un pion de guidage (124) qui est fixé à l'organe de raccordement (120) et se déplace de façon rectiligne le long de la rainure de guidage (131a).
